# EUROPÄISCHE PATENTANMELDUNG

(11) **EP 4 276 050 A1**
(43) Veröffentlichungstag der Anmeldung: **15.11.2023**
(21) Anmeldenummer: 23169482.9
(22) Anmeldetag: 24.04.2023
(51) Int. Cl.: B66F 9/06, B66F 9/075, B66F 9/24, G05B 19/418

(54) **SCHNITTSTELLENEINHEIT ZUR AUFNAHME EINER PALETTE AUF EINEM UNTERFAHR-SHUTTLE**

(30) Priorität: 13.05.2022 DE 102022112079
(71) Anmelder: Jungheinrich Aktiengesellschaft, 22047 Hamburg (DE)
(72) Erfinder: RIPHAUS, Tobias, 81737 München (DE); LEFFLER, Marius, 86551 Aichach (DE); WOLF, Romano, 80799 München (DE); GATHMANN, Hauke, 80797 München (DE)
(74) Vertreter: Weickmann & Weickmann PartmbB

(57) **Zusammenfassung**

Die vorliegender Erfindung betrifft eine Schnittstelleneinheit (10) zur Aufnahme einer Palette (200) auf einem Unterfahr-Shuttle (100), umfassend eine Anbringungseinheit (12) für ein Anbringen der Schnittstelleneinheit (10) an einer Oberseite (100a) des Unterfahr-Shuttles (100) und zwei sich parallel gemäß einer Längenrichtung (L) zueinander nach oben erstreckende Auflageabschnitte (14, 16), welche durch ihre jeweiligen Oberseiten einen alleinigen Auflagebereich für eine zu tragende Palette (200) bilden; wobei bezogen auf eine Breitenrichtung (B) zwischen den Auflageabschnitten (14, 16) eine sich ebenfalls in der Längenrichtung (L) erstreckende zentrale Vertiefung (18) vorgesehen ist. Ferner betrifft die Erfindung ein durch eine solche Schnittstelleneinheit (10) und eine Palette gebildetes System und ein Unterfahr-Shuttle (100), welches an seiner Oberseite montiert eine derartige Schnittstelleneinheit (10) aufweist.

## Beschreibung

Die vorliegende Erfindung betrifft eine Schnittstelleneinheit zur Aufnahme einer Palette auf einem Unterfahr-Shuttle, ein System, gebildet aus einer derartigen Schnittstelleneinheit und einer Palette, sowie ein Unterfahr-Shuttle, welches an seiner Oberseite montiert eine derartige Schnittstelleneinheit umfasst.

Im Rahmen der zunehmenden Automatisierung von Logistikeinrichtungen haben in jüngerer Zeit sogenannte Unterfahr-Shuttle zunehmend an Bedeutung gewonnen, die autonom oder halb-autonom auf ihrer Oberseite Lasten transportieren können, wie beispielsweise unterschiedliche Typen von Paletten mit darauf getragenen Waren. Zur Aufnahme derartiger Lasten werden diese in einer Übergabestation von einem Unterfahr-Shuttle unterfahren und die entsprechende Ladefläche an der Oberseite des Unterfahr-Shuttles wird angehoben, bis die Last von der Übergabestation abgehoben ist und hierauf getragen wird und dann an einen vorgesehenen Ort transportiert und erneut übergeben werden kann. Zu diesem Zweck sind derartige Unterfahr-Shuttle in der Regel zu einer omnidirektionalen Fortbewegung eingerichtet und werden über ein Leitsystem hinsichtlich ihres Betriebs koordiniert und angesteuert. Da die von solchen Unterfahr-Shuttles zu transportierenden Lasten erheblich sein können und teilweise eine Tonne an Gewicht überschreiten, ist es unerlässlich, sicherzustellen, dass sie auf der Oberseite der Unterfahr-Shuttle zuverlässig getragen und gegen ein Verrutschen und/oder Kippen gesichert sind, da die Gefahr von Unfällen aufgrund verrutschender Ladung erheblich und eine Bergung einer solchen abgerutschten Last überaus aufwendig ist.

Hierzu ist es aus dem Stand der Technik bekannt, mehr oder minder flache Adapterplatten an den Oberseiten von Unterfahr-Shuttles vorzusehen bzw. anzubringen, auf welcher eine Palette großflächig aufstehen kann, wie dies beispielsweise aus der EP 3 656 702 bekannt ist. Ferner ist beispielsweise aus der WO 2006/044108 A2 der Einsatz von Dornen für die Kopplung eines Unterfahr-Shuttles an Regale bekannt.

Hierbei zeigt sich jedoch, dass die aus dem Stand der Technik bekannten Lösungen zur Aufnahme von Paletten auf Unterfahr-Shuttles dahingehend nachteilig sind, dass beispielsweise im Falle eines Defekts eine Übernahme entsprechender Paletten von den Unterfahr-Shuttles schwierig ist und ferner eine korrekte Positionierung der entsprechenden Paletten auf den Unterfahr-Shuttles während ihres Betriebs nur schwerlich überprüfbar ist.

Es ist somit die Aufgabe der vorliegenden Erfindung, eine verbesserte Schnittstelleneinheit zur Aufnahme einer Palette auf einem Unterfahr-Shuttle bereitzustellen, welche einerseits die oben genannten Nachteile aus dem Stand der Technik beheben kann und andererseits für eine sichere und gegen Verrutschen oder Kippen geschützte Auflage für eine entsprechende Palette bildet.

Zu diesem Zweck umfasst die erfindungsgemäße Schnittstelleneinheit eine Anbringungseinheit für ein Anbringen der Schnittstelleneinheit an einer Oberseite des Unterfahr-Shuttles und zwei sich parallel gemäß einer Längenrichtung zueinander nach oben erstreckende Auflageabschnitte, welche durch ihre jeweiligen Oberseiten einen alleinigen Auflagebereich für eine zu tragende Palette bilden, wobei bezogen auf eine Breitenrichtung zwischen den Auflageabschnitten eine sich ebenfalls in der Längenrichtung erstreckende zentrale Vertiefung vorgesehen ist. Auf diese Weise kann mit der erfindungsgemäßen Schnittstelleneinheit insbesondere bei einem Zusammenwirken mit Europaletten oder ähnlich aufgebauten Typen von Paletten die Palette im Bereich ihrer mittleren Klötze in der zentralen Vertiefung einliegen und ein großflächiger Kontakt lediglich über die in Breitenrichtung aufliegenden oberen Bretter hergestellt werden, wodurch auf diese Weise ein Verrutschen in der Breitenrichtung ausgeschlossen ist. Hierbei versteht sich, dass die erfindungsgemäße Schnittstelleneinheit je nach Ausgestaltung auf eine an der Oberseite des Unterfahr-Shuttles vorgesehenen Deckenplatte aufsetzbar sein kann, welche den Innenraum davon nach oben begrenzt, oder dass die Schnittstelleneinheit selbst die Funktion einer derartigen Deckenplatte erfüllen kann.

Alternativ kann zur Lösung derselben Aufgabe auch eine Schnittstelleneinheit zur Aufnahme einer Palette auf einem Unterfahr-Shuttle vorgesehen werden, welche zwei sich parallel gemäß einer Längenrichtung zueinander erstreckende Auflageabschnitte, welche in einer Höhenrichtung zwischen einer zurückgezogenen Position und einer ausgefahrenen Position verlagerbar sind, wobei sie in der ausgefahrenen Position durch ihre jeweiligen Oberseiten einen alleinigen Auflagebereich für eine zu tragende Palette bilden, und eine Verlagerungseinheit umfasst, welche dazu eingerichtet ist, eine Verlagerung der Auflageabschnitte zwischen der zurückgezogenen und der ausgefahrenen Position zu bewirken, wobei in der ausgefahrenen Position bezogen auf eine Breitenrichtung zwischen den Auflageabschnitten eine sich ebenfalls in der Längenrichtung erstreckende zentrale Vertiefung vorgesehen ist. Dementsprechend ist in dieser alternativen Lösung die Schnittstelleneinheit in das Fahrzeug in einer derartigen Weise integriert, dass die weiteren Komponenten, also insbesondere die Auflageabschnitte, aus der Fahrzeugoberseite herausgefahren werden können. Die folgende Beschreibung von beispielhaften Ausgestaltungen der Auflageabschnitte bezieht sich demzufolge in dieser Ausführungsform jeweils auf die ausgefahrene Position davon.

Insbesondere können in der erfindungsgemäßen Schnittstelleneinheit die Auflageabschnitte entlang der Längenrichtung jeweils wenigstens eine, vorzugsweise wenigstens zwei Durchbrechungen aufweisen, sodass die entsprechenden Auflagebereiche jeweils durch wenigstens zwei, vorzugsweise wenigstens drei Höcker gebildet sind. Durch diese Durchbrechungen der Auflageabschnitte wird ein Zugang zu der Palette in Breitenrichtung geschaffen und es kann beispielsweise im Falle eines Defekts des Unterfahr-Shuttles durch ein externes Flurförderzeug die darauf aufgenommene Palette aus seitlicher Richtung übernommen werden, indem das externe Flurförderzeug mit seinen Gabelzinken in die Durchbrechungen und damit die hierzu vorgesehenen Taschen der Palette einfährt, die Palette anhebt und sie anschließend abtransportieren kann. Hierbei wird in Ausführungsformen mit wenigstens drei Höckern zwischen den Enden der Palette in Längenrichtung jeweils wenigstens ein weiterer Auflagepunkt geschaffen, während sich in Ausführungsformen mit lediglich zwei Höckern pro Auflageabschnitt die Palette ggf. in einem etwas höheren Maße durchbiegen wird. Dementsprechend ist die Ausführung mit zumindest drei Höckern pro Auflageabschnitt bevorzugt, wobei die Höcker derart platziert sind, dass bei der Einfahrt mit Gabelzinken von der Seite der Freiraum zwischen zwei Höckern jeweils mit der entsprechenden Aussparung der Palette überlappt, so dass die Gabelzinken in die Palette eingeschoben werden können.

Hierbei können die Auflageabschnitte bzw. die Höcker wenigstens teilweise nach oben in Richtung ihrer Oberseiten zulaufend ausgebildet sein, insbesondere wenigstens von der zentralen Vertiefung her, wodurch bei einem Übernahmevorgang einer Palette deren korrekte Positionierung durch eine entsprechende Zentrierwirkung sichergestellt werden kann, so dass ihre Auflage stets in der korrekten Position erfolgt. Ferner führt die in ihrem unteren Bereich verjüngte zentrale Vertiefung dazu, dass dieser Bereich durch die Auflageabschnitte bzw. Höcker in Breitenrichtung eng begrenzt ist und die Palette somit zusätzlich gegen ein Verrutschen in Breitenrichtung im Bereich von mittleren Palettenklötzen geschützt ist, die bei einer solchen Bewegung an den Auflageabschnitten bzw. Höckern anstoßen würden.

In jedem Fall kann an der Oberseite der Auflageabschnitte eine Anti-Rutsch-Schicht vorgesehen sein und/oder an wenigstens einem Ende der Auflageabschnitte, bevorzugt an beiden Enden der Auflageabschnitte, in der Längenrichtung ein sich nach oben erstreckender Anschlag vorgesehen sein, welcher selbst nicht mehr als Teil des entsprechenden Auflagebereichs anzusehen ist. Auf diese Weise wird auch in der Längenrichtung der Schnittstelleneinheit ein Verrutschen von aufgenommenen Paletten noch zuverlässiger verhindert.

Weiterhin kann die erfindungsgemäße Schnittstelleneinheit ferner eine Positionsbestimmungseinheit umfassen, welche dazu eingerichtet ist, eine relative Position einer auf der Schnittstelleneinheit getragenen Palette zu bestimmen. Hierdurch kann sowohl bei einer Übernahme einer Palette als auch während eines Fahrbetriebs des mit der Schnittstelleneinheit ausgestatteten Unterfahr-Shuttles sichergestellt werden, dass eine aufgenommene Palette in einer korrekten relativen Position bezüglich der Schnittstelleneinheit befindlich ist, und im Falle, dass dies nicht zutreffen sollte, kann das Unterfahr-Shuttle beispielsweise zeitweilig stillgelegt werden oder andere Maßnahmen zur Behebung des Problems können angewiesen werden.

Hierbei ist denkbar, die Positionsbestimmungseinheit beispielsweise durch einen oder mehrere Kraft- oder Spannungssensoren auszubilden, welche eine Größe und Verteilung der durch die Last eingewirkten Kraft bzw. Spannung abbilden können. Zum selben Zweck kann die Positionsbestimmungseinheit jedoch ebenfalls wenigstens eine Erfassungseinheit umfassen, welche dazu eingerichtet ist, ein Vorliegen eines Objekts in Breitenrichtung zwischen den Auflageabschnitten an einer vorbestimmten Erfassungsposition festzustellen, oder welche dazu eingerichtet ist, ein Vorliegen eines Objekts oberhalb wenigstens eines der Auflageabschnitte festzustellen. Hierbei kann demzufolge beispielsweise ein Abschnitt einer aufgenommenen Palette und im Spezialfall einer Europalette erfasst werden, insbesondere einen der in Breitenrichtung mittleren Klötze oder das diese verbindende untere Brett. Alternativ könnte jedoch ebenfalls eine derartige Anordnung der Positionsbestimmungseinheit gewählt werden, dass ein äußerer Klotz oder ein äußeres Brett erfasst werden kann.

Hierbei kann in einer Ausführungsform vorgesehen sein, wenigstens drei Erfassungseinheiten in der Schnittstelleneinheit zu integrieren, von welchen jeweils eine an einem jeweiligen Ende der Auflageabschnitte in Längenrichtung, insbesondere außerhalb der Auflagebereiche, und eine in einem zentralen Bereich in Längenrichtung der Auflagebereiche vorgesehen ist.

In der bereits weiter oben angesprochenen Ausführungsform der erfindungsgemäßen Schnittstelleneinheit mit in den Auflageabschnitten vorgesehenen Durchbrechungen kann jeder von diesen Auflageabschnitten insbesondere drei Höcker umfassen und jedem der Paare von Höckern kann jeweils eine der Erfassungseinheiten zugeordnet sein oder es kann lediglich den beiden äußeren Paaren von Höckern jeweils eine der Erfassungseinheiten zugeordnet sein. In der erstgenannten Variante kann im zentralen Bereich das Vorliegen der Palette auf der Schnittstelleneinheit detektiert werden, während durch das Vorsehen der beiden an den jeweiligen Enden in Längenrichtung vorgesehenen Erfassungseinheiten sichergestellt werden kann, dass sich die Palette nicht in den entsprechenden Bereich hinein erstreckt und somit in einer korrekten Positionierung hinsichtlich der Längenrichtung vorliegt. Eine korrekte Positionierung der Palette entspricht in dieser Ausführungsform demzufolge einem Fall, in welchem die mittlere Erfassungseinheit das Vorliegen eines Objekts meldet, die beiden äußeren Erfassungseinheiten dem hingegen nicht. Hierbei können die jeweiligen von den Erfassungseinheiten gelieferten Daten durch eine wie auch immer geartete Auswerteeinheit hinsichtlich dieser Bedingung ausgewertet werden. In der zweiten genannten Variante kann dem hingegen bei einem Verzicht auf die mittlere Erfassungseinheit eine korrekte Aufnahme einer Palette derart festgestellt werden, dass die beiden verbleibenden äu-ßeren Erfassungseinheiten jeweils das Vorliegen eines Objekts detektieren.

Wenngleich unterschiedliche Ausführungen von Erfassungseinheiten für einen Einsatz in einer erfindungsgemäßen Schnittstelleneinheit geeignet sein können, beispielsweise auch mechanische Schalter, welche durch einen physischen Kontakt mit einer Palette ausgelöst werden, so kann in einer besonders bevorzugten Ausführungsform wenigstens eine der Erfassungseinheiten durch eine Lichtschrankeneinheit oder einen Abstandssensor ausgebildet sein, was die Verarbeitung der gelieferten Daten vereinfacht und gleichzeitig eine kostengünstige und zuverlässig arbeitende Ausführung der Erfassungseinheiten ermöglicht. Bei derartigen Abstandssensoren kann es sich insbesondere um sogenannte Reflexlichtschranken oder abstandsmessende Lichtschranken handeln.

Hierbei kann wenigstens eine der Lichtschrankeneinheiten derart angeordnet sein, dass sich die entsprechende Lichtschranke zwischen zwei Enden eines der Auflageabschnitte in Längsrichtung bzw. zwischen zwei äußersten der Höcker in Längsrichtung erstreckt, und kann insbesondere einem Paar der sich nach oben erstreckenden Anschläge zugeordnet sein, oder alternativ kann wenigstens einer der Abstandssensoren derart angeordnet sein, dass sich ein entsprechender Abtastbereich im Wesentlichen parallel zu einer Oberseite eines der Auflageabschnitte erstreckt, wobei der entsprechende Abstandssensor insbesondere einem der sich nach oben erstreckenden Anschläge zugeordnet sein kann. Durch eine derart angeordnete Lichtschranke oder einen derart angeordneten Abstandssensor kann in vorteilhafter Weise das Vorliegen einer Palette auf der Schnittstelleneinheit festgestellt werden.

Alternativ oder zusätzlich kann wenigstens eine der Lichtschrankeneinheiten oder einer wenigstens einer der Abstandssensoren, insbesondere die beiden an einem jeweiligen Ende der Auflageabschnitte in Längenrichtung vorgesehenen Lichtschrankeneinheiten oder Abstandssensoren, derart angeordnet sein, dass sich ihr Abtastbereich schräg in einer Höhenrichtung erstreckt. Durch diese Anordnung kann sichergestellt werden, dass eine zuverlässige Detektion eines in diesem Bereich vorliegenden Abschnitts einer Palette stattfindet, insbesondere indem der Verlauf der Lichtschranke in einem Bereich liegt, in welchem ein unteres Brett einer derartigen Palette, beispielsweise einer Europalette, liegen könnte, selbst wenn ein entsprechender Klotz der Palette bereits weiter außerhalb in Längenrichtung liegen würde, da eine ausschließlich horizontale Erfassung des Bretts aufgrund der Dimensionen des Bretts, welches sich vor allem in horizontaler Richtung erstreckt, mit einer größeren Unsicherheit behaftet wäre.

Eine bevorzugte Ausführungsform einer erfindungsgemäßen Schnittstelleneinheit kann sich dadurch auszeichnen, dass die sich zwischen zwei äußersten der Höcker in Längsrichtung erstreckende Lichtschranke oder ein entsprechender Abstandssensor mit jeweiligen den äußersten Höckern zugeordneten und sich schräg nach oben in Breitenrichtung erstreckenden Lichtschranken oder Abstandssensoren kombiniert wird, wobei in einer solchen Ausgestaltung unter Umständen auf ein Vorsehen einer weiteren Erfassungseinheit im Bereich von mittleren Höckern verzichtet werden kann. In dieser spezifischen Ausführungsform kann die sich in Längsrichtung erstreckende Lichtschranke die Anwesenheit einer Palette oder einer Gitterbox detektieren, während die beiden schräg verlaufenden Lichtschranken detektieren können, ob die entsprechende Palette oder Gitterbox korrekt auf der Schnittstelleneinheit aufliegt.

Während die von der wenigstens einen Erfassungseinheit gelieferten Daten unmittelbar in der Schnittstelleneinheit selbst weiterverarbeitet werden könnten und beispielsweise durch eine ebenfalls dort integrierte Ausgabeeinheit unmittelbar eine entsprechende Warnung ausgegeben werden könnte, so kann die Anbringungseinheit ferner eine Kopplungseinheit für ein elektronisches Verbindungen von Komponenten der Schnittstelleneinheit und des Unterfahr-Shuttles umfassen, sodass bei einer Ausgabe einer Warnung durch die wenigstens eine Erfassungseinheit bzw. der oben bereits angesprochenen Auswerteeinheit direkt ein Eingriff durch die Steuereinheit des Unterfahr-Shuttles auf Grundlage der derart gelieferten Daten unternommen werden könnte, beispielsweise ein Versetzen des Unterfahr-Shuttles in einen sicheren Zustand, ein sofortiges Stilllegen davon und/oder eine Ausgabe einer entsprechenden Mitteilung an ein Leitsystem mittels einer hierzu vorgesehenen Kommunikationseinheit. Hierbei versteht sich, dass in derartigen Ausführungsformen die Auswerteeinheit sowohl in der Schnittstelleneinheit als auch dem Unterfahr-Shuttle selbst angeordnet sein könnte und demzufolge über die Kopplungseinheit entweder Roh-Sensordaten oder bereits von der Auswerteeinheit aufbereitete Daten geliefert werden könnten.

Andererseits kann die Schnittstelleneinheit selbst ebenfalls eine Bedieneinheit umfassen, insbesondere einen Notausschalter, mittels welchem wenigstens eine Funktion des Unterfahr-Shuttles bedienbar ist. Auch die Weitergabe entsprechender über die Bedieneinheit eingegebenen Steuerbefehle kann mittels der Kopplungseinheit der Anbringungseinheit erfolgen, es könnten jedoch in alternativen Ausführungsformen für die beiden vorgesehenen Kommunikationskanäle, also von der wenigstens einen Erfassungseinheit oder Auswerteeinheit bzw. der Bedieneinheit der Schnittstelleneinheit zu der Steuereinheit des Unterfahr-Shuttles, auch drahtlose Kommunikationsmittel an den beiden Komponenten vorgesehen und kommunikativ gekoppelt sein.

Weiterhin betrifft die vorliegende Erfindung ein System, welches aus einer Schnittstelleneinheit der eben beschriebenen Art sowie einer Palette gebildet ist, wobei die vertikale Erstreckung der Auflageabschnitte der Schnittstelleneinheit und die Bauhöhe der Palette derart abgestimmt sind, dass die Palette in einem auf der Schnittstelleneinheit aufliegenden Zustand lediglich von den Auflagebereichen getragen ist.

Ferner können selbstverständlich auch die jeweilige Positionierung der wenigstens einen Erfassungseinheit und auch die geometrischen Abmessungen der Auflagebereiche hinsichtlich ihrer Oberseite auf den konkreten Typ einer zu tragenden Palette abgestimmt sein. Dementsprechend kann es notwendig sein, bei einem vorgesehenen Transport von sich deutlich voneinander unterscheidenden Typen von Paletten auf einem einzelnen Unterfahr-Shuttle in einer Logistikeinrichtung zu unterschiedlichen Zeiten mehrere Typen von Schnittstelleneinheiten vorzusehen, die je nach Bedarf an dem Unterfahr-Shuttle montiert oder auch wieder getauscht werden können.

Ferner betrifft die vorliegende Erfindung ein Unterfahr-Shuttle, umfassend an seiner Oberseite montiert eine Schnittstelleneinheit der oben beschriebenen Art, wobei das Unterfahr-Shuttle in einer Draufsicht einen im Wesentlichen quadratischen Umriss aufweisen kann und wobei die Schnittstelleneinheit in der Längenrichtung durch die Auflageabschnitte an beiden Seiten über den Umriss des Unterfahr-Shuttles überstehen kann. Auf diese Weise kann das entsprechende Unterfahr-Shuttle mit kompakten Abmessungen bereitgestellt werden und somit hinsichtlich seiner Flexibilität dahingehend optimiert werden, dass auch relativ enge Bereiche und Gänge in Logistikeinrichtungen dafür zugänglich werden.

Wie bereits weiter oben angedeutet, kann hierbei eine Steuereinheit des Unterfahr-Shuttles dazu eingerichtet sein, Daten von wenigstens einer elektronischen Komponente der Schnittstelleneinheit zu erhalten und zu verarbeiten, also beispielsweise der oben angesprochenen Erfassungseinheiten, der Auswerteeinheit oder der Bedieneinheit.

Weitere Merkmale und Vorteile der vorliegenden Erfindung werden aus der nachfolgenden Beschreibung einer Ausführungsform davon noch deutlicher, wenn diese zusammen mit den beiliegenden Figuren betrachtet wird. Diese zeigen im Einzelnen:
- Fig. 1: ein Unterfahr-Shuttle mit einer an seiner Oberseite montierten Schnittstelleneinheit gemäß der vorliegenden Erfindung in isometrischer Ansicht;
- Fig. 2: das Unterfahr-Shuttle aus Fig. 1 mit einer auf der Schnittstelleneinheit aufgenommenen Palette entlang der Längenrichtung davon betrachtet;
- Fig. 3: das Unterfahr-Shuttle aus Fig. 2 entlang der Breitenrichtung davon betrachtet;
- Fig. 4: das Unterfahr-Shuttle aus Fig. 2 in einer Draufsicht, wobei die oberen Bretter der Palette aus Gründen der Sichtbarkeit entfernt sind; und
- Fig. 5: eine alternative Variante des Unterfahr-Shuttles aus Fig. 1 in einer ähnlichen Ansicht.

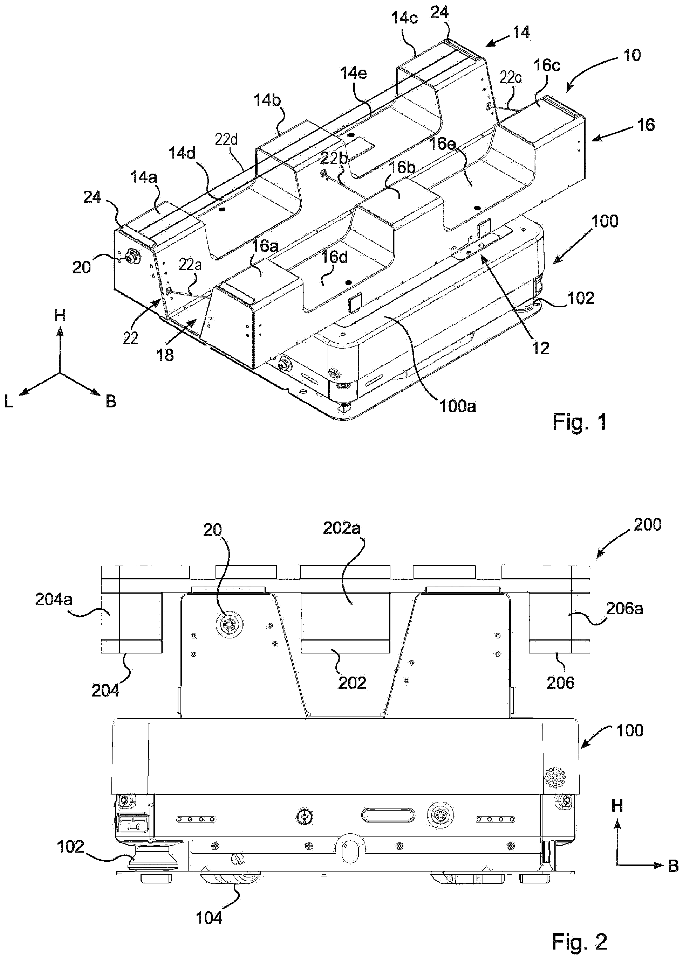

In Fig. 1 ist isometrischer Ansicht ein Unterfahr-Shuttle 100 mit einem in Draufsicht im Wesentlichen quadratischen Umriss gezeigt, welches an seiner Oberseite montiert eine erfindungsgemäße Schnittstelleneinheit 10 umfasst. Diese Schnittstelleneinheit 10 ist mittels einer lediglich schematisch dargestellten Anbringungseinheit 12 an einer Oberseite 100a des Unterfahr-Shuttles 100 montiert, wobei ebenfalls eine in den Figuren nicht dargestellte Kopplungseinheit in der Anbringungseinheit 12 umfasst ist, welche ein elektrisches Verbinden von Komponenten der Schnittstelleneinheit 10 und des Unterfahr-Shuttles 100 ermöglicht.

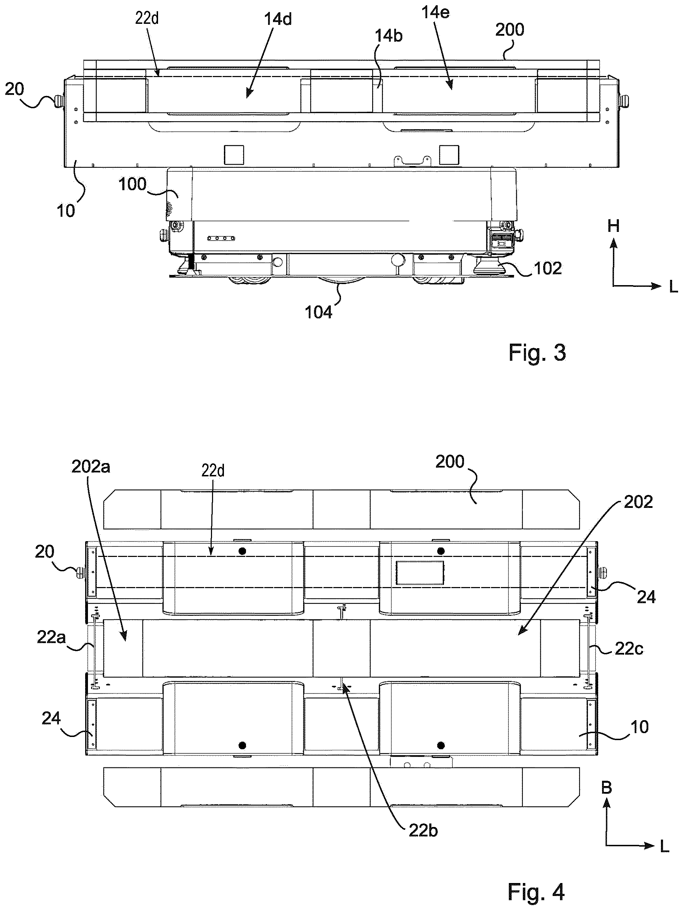

Die prinzipielle Ausgestaltung des Unterfahr-Shuttles ist aus dem Stand der Technik bekannt und es umfasst Komponenten wie eine Steuereinheit für einen autonomen oder halb-autonomen Betrieb, eine Kommunikationseinheit für eine Datenverbindung mit einem externen Leitsystem, ein omnidirektionales Fortbewegungssystem, welches von der angesprochenen Steuereinheit betrieben wird, sowie in den Figuren zu erkennende und in den Ecken des Unterfahr-Shuttles 100 vorgesehene Sensoreinheiten 102, wie beispielsweise Laserscanner zur Erfassung seiner Umgebung. Zudem ist das Unterfahr-Shuttle mit einer Hubeinrichtung in einer an sich bekannten Weise ausgestattet, um die Oberseite 100a und damit die Schnittstelleneinheit 10 gegenüber einem Untergrund anzuheben, um Paletten beispielsweise von Übergabestationen abzuheben und auf diese abzustellen. Ferner sind in den Fig. 2 und 3 jeweils Räder 104 zu erkennen, mit welchen das Unterfahr-Shuttle 100 auf dem Untergrund aufsteht und welche Komponenten des angesprochenen omnidirektionalen Fortbewegungssystems bilden, mittels welchen eine Fortbewegung des Unterfahr-Shuttles 100 in einem Logistikumfeld ermöglicht wird.

Während das Unterfahr-Shuttle 100 einen im Wesentlichen quadratischen Grundriss aufweist, so definiert die Schnittstelleneinheit 10 eine Längenrichtung L sowie eine Breitenrichtung B, wobei sich gemäß der Längenrichtung zwei parallele Auflageabschnitte 14 und 16 nach oben erstrecken, welche durch ihre jeweiligen Oberseiten einen alleinigen Auflagebereich für eine zu tragende Palette 200 bilden, welche in den Fig. 2 bis 4 in Form einer Europalette in ihrer üblichen Bauform gezeigt ist. Hierbei ist bezogen auf die Breitenrichtung B zwischen den Auflageabschnitten 14 und 16 eine sich ebenfalls in der Längenrichtung L erstreckende zentrale Vertiefung 18 vorgesehen, in welcher die zentralen Klötze 202a sowie das zentrale untere Brett 202 der Palette 200 einliegen können, während sich die seitlichen Klötze 204a, 206a und seitlichen unteren Bretter 204, 206 jeweils in Breitenrichtung B seitlich der Auflageabschnitte 14 bzw. 16 befinden, wie insbesondere in Fig. 2 gut zu erkennen ist.

An dieser Stelle sei darauf hingewiesen, dass neben der hier gezeigten Ausführungsform eines Unterfahr-Shuttles in Varianten der vorliegenden Erfindung ebenfalls denkbar wäre, die Auflageabschnitte 14 und 16 in dem Körper des Unterfahr-Shuttles 100 horizontal versenkbar und ausfahrbar vorzusehen, so dass sie mittels einer Verlagerungseinheit in einer entsprechenden Weise von einer zurückgezogenen Position nach oben ausfahrbar wären, wobei die ausgefahrene Position der Auflageabschnitte 14 und 16 dann gerade derjenigen Konfiguration entsprechen würde, die in den hier vorliegenden Figuren gezeigt ist.

Weiterhin ist in den Fig. 1 und 3 zu sehen, dass die Auflageabschnitte 14 und 16 jeweils durch drei Höcker 14a bis 14c bzw. 16a bis 16c gebildet sind, da sie entlang der Längenrichtung L jeweils zwei Durchbrechungen 14d und 14e bzw. 16d und 16e aufweisen. In der Ansicht gemäß der Breitenrichtung B aus Fig. 3 ist hierbei zu erkennen, dass die Klötze der Palette 200 und die Höcker 14a bis 14c bzw. 16 bis 16c in einer derartigen Weise miteinander ausgerichtet sind, dass durch die Durchbrechungen 14d, 14e bzw. 16d, 16e eine Einfahrt einer Gabel eines externen weiteren Flurförderzeugs in die Taschen der Palette ermöglicht wird, mittels welchem die Palette 200 von der Breitenrichtung B her aufgenommen und beispielsweise im Fall einer Störung des Unterfahr-Shuttles 100 geborgen werden kann.

Ferner ist in der Ansicht entlang der Längenrichtung L aus Fig. 2 zu erkennen, dass die Schnittstelleneinheit 10 mit einer Bedieneinheit 20 in Form eines Notaus-Schalters versehen ist, welcher über die oben angesprochene Kopplungseinheit mit der Steuereinheit des Unterfahr-Shuttles 100 gekoppelt ist und für einen Notaus des Unterfahr-Shuttles 100 bedient werden kann.

Des Weiteren umfasst die Schnittstelleneinheit 10 eine Positionsbestimmungseinheit 22 mit vier Erfassungseinheiten 22a bis 22d in Form von Lichtschrankeneinheiten, wobei jedem der Höcker 14a bis 14c bzw. 16a bis 16c eine der Lichtschrankeneinheiten 22a bis 22c zugeordnet ist, welche sich jeweils in Breitenrichtung B über die zentrale Vertiefung 18 erstrecken und derart jeweilige Abtastbereiche definieren, wobei ferner eine vierte Lichtschrankeneinheit 22d vorgesehen ist, welche derart angeordnet ist, dass sich die entsprechende Lichtschranke zwischen den beiden äußersten Höckern 14a und 14c des ersten Auflageabschnitts 14 in Längsrichtung L oberhalb der entsprechenden Auflagefläche erstreckt, wobei die Lichtschrankeneinheit 22d insbesondere dem Paar von unten beschriebenen, sich nach oben erstreckenden Anschlägen 24 zugeordnet ist.

Es sei bereits an dieser Stelle darauf hingewiesen, dass in erfindungsgemäßen Schnittstelleneinheiten nicht sämtliche der Lichtschrankeneinheiten 22a bis 22d vorliegen müssen, sondern auch lediglich eine Teilmenge davon vorgesehen werden kann. Insbesondere wäre eine Kombination der in Längsrichtung L äußeren Lichtschrankeneinheiten 22a und 22c mit der sich in Längsrichtung L erstreckenden vierten Lichtschrankeneinheit 22d unter Verzicht auf die mittlere Lichtschrankeneinheit 22b denkbar. Alternativ wäre jedoch auch ein Vorsehen von lediglich den drei sich zwischen jeweiligen Paaren von Höckern 14a - 14c und 16a - 16c angeordneten Lichtschrankeneinheiten 22a bis 22c denkbar, wobei die Funktionsweise einer solchen Anordnung im Folgenden beschrieben sein soll. Ferner sei ebenfalls darauf hingewiesen, dass eine oder mehrere der Lichtschrankeneinheiten 22a bis 22d in analoger Weise auch durch einen Abstandssensor ersetzt sein könnten, welcher dazu in der Lage ist, das Vorliegen eines Objekts in seiner Nähe festzustellen.

Hierbei ist insbesondere in Fig. 1 zu erkennen, dass die Lichtschrankeneinheiten 22a und 22c an einem jeweiligen Ende der Auflageabschnitte 14 und 16 in Längenrichtung L vorgesehen und derart außerhalb davon angeordnet sind, dass sie sich bereits im Bereich der sich nach oben erstreckenden Anschlägen 24 zum Beschränken der Auflagebereiche in Längenrichtung befinden, d.h. in einem Bereich, in welchem eine korrekt aufliegende Palette bereits nicht mehr befindlich ist, wie sich aus der Ansicht aus Fig. 4 ergibt.

Weiterhin sind die beiden äußeren Lichtschrankeneinheiten 22a und 22c derart angeordnet, dass sich der jeweilige Abtastbereich, d.h. der Verlauf der Lichtschranke schräg in einer Höhenrichtung H erstreckt, um im Falle einer nicht korrekten Positionierung einer Palette 200 in jedem Fall im Bereich des mittleren unteren Bretts 202 davon zu liegen und dieses erfassen zu können.

Demhingegen zeichnet sich die in Fig. 4 gezeigte korrekte Positionierung der Palette 200 auf der Schnittstelleneinheit 10 dadurch aus, dass der zentrale mittlere Klotz der Palette 200 die mittlere Lichtschrankeneinheit 22b unterbricht, während die beiden äußeren Lichtschrankeneinheiten 22a und 22c nicht unterbrochen sind, sodass einerseits das Vorliegen der Palette 200 detektiert wird, andererseits jedoch sichergestellt ist, dass diese innerhalb des durch die beiden äußeren Lichtschrankeneinheiten 22a und 22c abgesteckten Berichts liegt.

Zur Auswertung der von den Lichtschrankeneinheiten 22a bis 22c gelieferten Daten kann entweder in der Schnittstelleneinheit 10 selbst oder in dem Unterfahr-Shuttle 100 eine hier nicht dargestellte Auswerteeinheit vorgesehen sein, die beispielsweise mit der Steuereinheit des Unterfahr-Shuttles 100 betriebsmäßig gekoppelt oder in ihr integriert sein kann, um eine entsprechende Reaktion des Unterfahr-Shuttles 100 auf die so gelieferten Auswertungsergebnisse auslösen zu können.

Die Auswertung der Lichtschrankeneinheiten kann in diesem Zusammenhang jeweils entweder ergeben, dass diese unterbrochen sind oder nicht. Ein Fehlerereignis, also eine falsch platzierte Palette 200, wird hierbei dann detektiert, wenn die mittlere Lichtschrankeneinheit 22b unterbrochen ist und zusätzlich ebenfalls eine der beiden anderen Lichtschrankeneinheiten 22a oder 22c. In ähnlicher Weise liegt ein Fehler vor, wenn die Lichtschrankeneinheit 22b nicht unterbrochen ist, jedoch zumindest eine der beiden anderen Lichtschrankeneinheiten 22a oder 22c.

Eine korrekt aufgenommene Palette wird demgegenüber wie oben beschrieben dadurch erfasst, dass ausschließlich die mittlere Lichtschrankeneinheit 22b unterbrochen ist. Ein unbeladenes Unterfahr-Shuttle würde durch drei nicht unterbrochene Lichtschrankeneinheiten 22a-c detektiert werden, wobei denkbar ist, dass zusätzlich noch ein weiterer hier nicht dargestellter Sensor ausgewertet wird, der die Masse einer aufgenommenen Last ermittelt, um auszuschließen, dass sich eine in extremer Weise verrutschte Palette so auf der Schnittstelleneinheit 10 befindet, dass keine der drei Lichtschrankeneinheiten 22a-c unterbrochen wird.

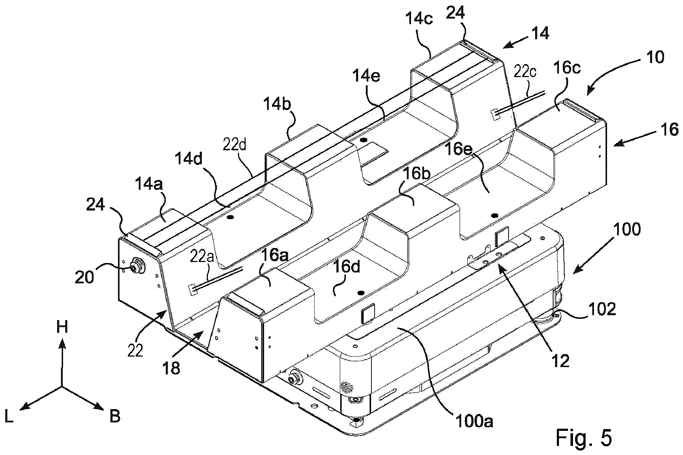

Zuletzt sei noch auf die Variante aus Fig. 5 hingewiesen, in welcher in der oben bereits kurz erwähnten Weise lediglich drei Erfassungseinheiten 22a, 22c und 22d vorgesehen sind, während auf die mittlere Erfassungseinheit 22b verglichen mit der Variante aus Fig. 1 verzichtet worden ist. Hierbei sei ferner darauf hingewiesen, dass die beiden den äußeren Paaren von Höckern 14a, 16a bzw. 14c, 16c zugeordneten Erfassungseinheiten 22a und 22c statt durch Lichtschrankeneinheiten in dieser Variante durch Abstandssensoren gebildet sind, so dass ihr jeweilige Erfassungsbereich in Fig. 5 in einer etwas anderen Weise verläuft und dargestellt ist. In diesem Zusammenhang soll ebenfalls erwähnt werden, dass in der in Fig. 5 gezeigten Variante die Erfassungseinheiten 22a und 22c weiter in Richtung eines zentralen Bereichs der Schnittstelleneinheit bezogen auf ihre Längenrichtung L verglichen mit der Ausgestaltung aus Fig. 1 versetzt sind. Demzufolge wird in dieser Variante eine korrekte Aufnahme einer Palette dann erkannt, wenn die beiden Erfassungseinheiten 22a und 22c jeweils das Vorliegen eines Objekts detektieren, was ebenfalls im Gegensatz zu der oben beschriebenen Ausführungsform aus Fig. 1 steht, in welcher - wie insbesondere aus Fig. 4 nachvollziehbar ist - die Abwesenheit eines Objekts im Erfassungsbereich der Lichtschrankeneinheiten 22a und 22c gefordert wird, um eine korrekte Positionierung der entsprechenden Palette 200 sicherzustellen.

## Patentansprüche

1. Schnittstelleneinheit (10) zur Aufnahme einer Palette (200) auf einem Unterfahr-Shuttle (100),
umfassend:
- eine Anbringungseinheit (12) für ein Anbringen der Schnittstelleneinheit (10) an einer Oberseite (100a) des Unterfahr-Shuttles (100); und
- zwei sich parallel gemäß einer Längenrichtung (L) zueinander nach oben erstreckende Auflageabschnitte (14, 16), welche durch ihre jeweiligen Oberseiten einen alleinigen Auflagebereich für eine zu tragende Palette (200) bilden;
wobei bezogen auf eine Breitenrichtung (B) zwischen den Auflageabschnitten (14, 16) eine sich ebenfalls in der Längenrichtung (L) erstreckende zentrale Vertiefung (18) vorgesehen ist.

2. Schnittstelleneinheit zur Aufnahme einer Palette (200) auf einem Unterfahr-Shuttle (100),
umfassend:
- zwei sich parallel gemäß einer Längenrichtung (L) zueinander erstreckende Auflageabschnitte (14, 16), welche in einer Höhenrichtung zwischen einer zurückgezogenen Position und einer ausgefahrenen Position verlagerbar sind, wobei sie in der ausgefahrenen Position durch ihre jeweiligen Oberseiten einen alleinigen Auflagebereich für eine zu tragende Palette (200) bilden; und
- eine Verlagerungseinheit, welche dazu eingerichtet ist, eine Verlagerung der Auflageabschnitte (14, 16) zwischen der zurückgezogenen und der ausgefahrenen Position zu bewirken;
wobei in der ausgefahrenen Position bezogen auf eine Breitenrichtung (B) zwischen den Auflageabschnitten (14, 16) eine sich ebenfalls in der Längenrichtung (L) erstreckende zentrale Vertiefung (18) vorgesehen ist.

3. Schnittstelleneinheit (10) nach Anspruch 1 oder 2,
wobei die Auflageabschnitte (14, 16) entlang der Längenrichtung (L) jeweils wenigstens eine, vorzugsweise wenigstens zwei Durchbrechungen (14d, 14e, 16d, 16e) aufweisen, sodass die entsprechenden Auflagebereiche jeweils durch wenigstens zwei, vorzugsweise wenigstens drei Höcker (14a - 14c, 16a - 16c) gebildet sind.

4. Schnittstelleneinheit (10) nach einem der vorhergehenden Ansprüche, wobei Auflageabschnitte (14, 16) bzw. die Höcker (14a - 14c, 16a - 16c) wenigstens teilweise nach oben in Richtung ihrer Oberseiten zulaufend ausgebildet sind, insbesondere wenigstens von der zentralen Vertiefung (18) her.

5. Schnittstelleneinheit (10) nach einem der vorhergehenden Ansprüche, wobei an der Oberseite der Auflageabschnitte (14, 16) eine Anti-Rutsch-Schicht vorgesehen ist und/oder an wenigstens einem Ende der Auflageabschnitte (14, 16) in der Längenrichtung (L) ein sich nach oben erstreckender Anschlag (24) vorgesehen ist.

6. Schnittstelleneinheit (10) nach einem der vorhergehenden Ansprüche, ferner umfassend eine Positionsbestimmungseinheit (22), welche dazu eingerichtet ist, eine relative Position einer auf der Schnittstelleneinheit (10) getragenen Palette (200) zu bestimmen.

7. Schnittstelleneinheit (10) nach Anspruch 6,
wobei die Positionsbestimmungseinheit (22) wenigstens eine Erfassungseinheit (22a - 22d) umfasst, welche dazu eingerichtet ist, ein Vorliegen eines Objekts in Breitenrichtung (B) zwischen den Auflageabschnitten (14, 16) an einer vorbestimmten Erfassungsposition festzustellen, oder welche dazu eingerichtet ist, ein Vorliegen eines Objekts oberhalb wenigstens eines der Auflageabschnitte (14, 16) festzustellen,
die Schnittstelleneinheit (10) vorzugsweise umfassend wenigstens drei Erfassungseinheiten (22a - 22c), von welchen jeweils eine an einem jeweiligen Ende der Auflageabschnitte (14, 16) in Längenrichtung (L), insbesondere außerhalb der Auflagebereiche, und eine in einem zentralen Bereich in Längenrichtung (L) der Auflageabschnitte (14, 16) vorgesehen ist.

8. Schnittstelleneinheit (10) nach Anspruch 7 und Anspruch 3,
wobei jeder der Aufnahmebereiche (14, 16) drei Höcker (14a - 14c, 16a-16c) umfasst und jedem der Paare von Höckern (14a - 14c, 16a - 16c) jeweils eine der Erfassungseinheiten (22a - 22c) zugeordnet ist oder lediglich den beiden äußeren Paaren von Höckern (14a, 14c, 16a, 16c) jeweils eine der Erfassungseinheiten (22a, 22c) zugeordnet ist.

9. Schnittstelleneinheit (10) nach einem der Ansprüche 6 bis 8,
wobei wenigstens eine der Erfassungseinheiten (22a - 22d) durch eine Lichtschrankeneinheit oder einen Abstandssensor ausgebildet ist.

10. Schnittstelleneinheit (10) nach Anspruch 9,
wobei wenigstens eine der Lichtschrankeneinheiten (22d) derart angeordnet ist, dass sich die entsprechende Lichtschranke zwischen zwei Enden eines der Auflageabschnitte (14, 16) in Längsrichtung (L) bzw. zwischen zwei äußersten der Höcker (14a, 14c; 16a, 16c) in Längsrichtung (L) erstreckt, insbesondere einem Paar der sich nach oben erstreckenden Anschläge (24) zugeordnet ist, oder wobei wenigstens einer der Abstandssensoren derart angeordnet ist, dass sich ein entsprechender Abtastbereich im Wesentlichen parallel zu einer Oberseite eines der Auflageabschnitte (14, 16) in Längsrichtung (L) erstreckt, wobei der entsprechende Abstandssensor insbesondere einem der sich nach oben erstreckenden Anschläge (24) zugeordnet ist.

11. Schnittstelleinheit (10) nach Anspruch 9 oder 10,
wobei wenigstens eine der Lichtschrankeneinheiten (22a - 22c) oder wenigstens einer der Abstandssensoren, insbesondere die beiden an einem jeweiligen Ende der Auflageabschnitte (14, 16) in Längenrichtung (L) vorgesehenen Lichtschrankeneinheiten oder Abstandssensoren, derart angeordnet sind, dass sich ihr Abtastbereich schräg in einer Höhenrichtung (H) erstreckt.

12. Schnittstelleneinheit (10) nach einem der vorhergehenden Ansprüche, wobei die Anbringungseinheit (12) ferner eine Kopplungseinheit für ein elektronisches Verbinden von Komponenten der Schnittstelleneinheit (10) und des Unterfahr-Shuttles (100) umfasst, und/oder ferner umfassend eine Bedieneinheit (20), insbesondere eine NotausSchalter, mittels welcher wenigstens eine Funktion des Unterfahr-Shuttles (100) bedienbar ist.

13. System, gebildet aus einer Schnittstelleneinheit (10) nach einem der vorhergehenden Ansprüche und einer Palette (200), wobei die vertikale Erstreckung der Auflageabschnitte (14, 16) der Schnittstelleneinheit (10) und die Bauhöhe der Palette (200) derart abgestimmt sind, dass die Palette (200) in einem auf der Schnittstelleneinheit (10) aufliegenden Zustand lediglich von den Auflagebereichen (14, 16) getragen ist.

14. Unterfahr-Shuttle (100), umfassend an seiner Oberseite (100a) montiert eine Schnittstelleneinheit (10) nach einem der Ansprüche 1 bis 12.

15. Unterfahr-Shuttle (100) nach Anspruch 14,
welcher in einer Draufsicht einen im Wesentlichen quadratischen Umriss aufweist, wobei die Schnittstelleneinheit (10) in der Längenrichtung (L) durch die Auflageabschnitte (14, 16) an beiden Seiten über den Umriss des Unterfahr-Shuttles (100) übersteht und/oder
wobei eine Steuereinheit des Unterfahr-Shuttles (100) dazu eingerichtet ist, Daten von wenigstens einer elektronischen Komponente der Schnittstelleneinheit (10) zu erhalten und zu verarbeiten.
